# EUROPEAN PATENT SPECIFICATION

(11) **EP 3 575 217 B1**
(45) Date of publication and mention of the grant of the patent: **13.05.2020**
(21) Application number: 19177539.4
(22) Date of filing: 30.05.2019
(51) Int. Cl.: B64D 13/06, B64D 45/00, B64F 5/60, G05B 23/02

(54) **SYSTEMS AND METHODS FOR GENERATING AN ENVIRONMENTAL CONTROL SYSTEM HEALTH REPORT OF AN AIRCRAFT**
SYSTEME UND VERFAHREN ZUR ERSTELLUNG DES ZUSTANDSBERICHTS EINES KLIMAREGELUNGSSYSTEMS EINES FLUGZEUGS
SYSTÈMES ET PROCÉDÉS DE PRODUCTION D'UN RAPPORT SUR L'ÉTAT DE SANTÉ D'UN SYSTÈME DE COMMANDE ENVIRONNEMENTAL D'UN AÉRONEF

(30) Priority: 01.06.2018 US 201862679480 P; 29.06.2018 US 201816023548
(43) Date of publication of application: 04.12.2019
(73) Proprietor: Honeywell International Inc., Morris Plains, NJ 07950 (US)
(72) Inventor: SINGHAI, Mohit, Morris Plains, New Jersey 07950 (US); ROBSON, Oliver Paul, Morris Plains, New Jersey 07950 (US)
(74) Representative: Houghton, Mark Phillip

(56) References cited:
- EP-A1- 3 108 314
- EP-A1- 3 249 590
- US-A1- 2006 126 608
- US-B1- 9 724 979

## Description

### TECHNICAL FIELD

Various embodiments of the present disclosure relate generally to the field of an aircraft environmental control system and, more particularly, to systems and methods for automatically generating an environmental control system health report of an aircraft.

### BACKGROUND

The main function of an environmental control system (ECS) on modern jet aircraft is to provide air supply and cabin pressure for both the crew and the passengers. While the aircraft is in the air, the ECS works by bleeding hot compressed air from the main engine compressor and transporting it via ducts to pressurization air conditioning kits (PACKs). A PACK flow control valve is located in the duct to regulate the amount of bleed air entering the PACKs. The PACKs contain air conditioning (A/C) units, which include heat exchangers. Within the heat exchangers, cold outside air is supplied and cools the hot bleed air from the compressor to a desired PACK outlet temperature. The desired cabin temperature is controlled by regulating the amount of hot bleed air that is mixed with the cold outside air through a bypass valve. The regulated air is then fed to a mixing unit, which then transports the air into the cabin and the cockpit.

While the aircraft is on the ground and the main engines are off, the ECS is powered by an auxiliary power unit (APU) which compresses air to be supplied to the ECS. In some cases, the ECS might be found to be unhealthy due to air pollution, humidity, dust, sand, and other contaminants in the environment. Therefore, an ECS health check is typically conducted before certain flights to determine the health of an ECS before take-off. Currently, most ECS health checks are performed manually by engineers and technicians. Manual ECS health checks typically require manual data collection while the aircraft is on the ground at the gate and while the ECS is powered by the APU. This process requires costly labor and APU fuel burn and also must sometimes overcome inaccurate data points due to ambient contaminants. Due to this labor-intensive process, in many cases, a single health check is conducted only once per aircraft per week. This leaves a gap in data entry and may result in the technician unable to provide timely maintenance. This may lead to higher possibility of flight delays and can be very costly.

The present disclosure is directed to overcoming one or more of these above-referenced challenges. EP 3 108 314 B1 discloses a method for diagnosing a fault in an air-conditioning pack of an aircraft.

### SUMMARY OF THE INVENTION

According to certain aspects of the disclosure, systems and methods are disclosed for automatically generating an environmental control system health report of an aircraft.

According to certain aspects of the disclosure, computer-implemented methods are disclosed for automatically generating an environmental control system health report of an aircraft, the method comprising: receiving, automatically over an electronic network, flight data recorded during a flight, the flight data comprising a plurality of parameters of data collected from the aircraft during the flight; isolating a subset of the plurality of parameters of the flight data that relate to an environmental control system of the aircraft; analyzing the subset of the plurality of parameters of the flight data to identify a time window in which a pattern in the subset of the plurality of parameters of the flight data matches a known pattern of flight data corresponding to a flight condition; extracting, from within the identified time window, a sample of the subset of the plurality of parameters of the flight data; and generating an environmental control system health report for the aircraft based on the extracted sample of the subset of the plurality of parameters of the flight data.

According to certain aspects of the disclosure, computer systems are disclosed for automatically generating an environmental control system health report of an aircraft, the system comprising: a data storage device storing instructions for automatically generating an environmental control system health report of an aircraft; and a processor configured to execute the instructions to perform a method comprising: receiving, automatically over an electronic network, flight data recorded during a flight, the flight data comprising a plurality of parameters of data collected from the aircraft during the flight; isolating a subset of the plurality of parameters of the flight data that relate to an environmental control system of the aircraft; analyzing the subset of the plurality of parameters of the flight data to identify a time window in which a pattern in the subset of the plurality of parameters of the flight data matches a known pattern of flight data corresponding to a flight condition; extracting, from within the identified time window, a sample of the subset of the plurality of parameters of the flight data; and generating an environmental control system health report for the aircraft based on the extracted sample of the subset of the plurality of parameters of the flight data.

According to certain aspects of the disclosure, non-transitory, computer-readable mediums are disclosed storing instructions for performing a method for automatically generating an environmental control system health report of an aircraft, the method comprising: receiving, automatically over an electronic network, flight data recorded during a flight, the flight data comprising a plurality of parameters of data collected from the aircraft during the flight; isolating a subset of the plurality of parameters of the flight data that relate to an environmental control system of the aircraft; analyzing the subset of the plurality of parameters of the flight data to identify a time window in which a pattern in the subset of the plurality of parameters of the flight data matches a known pattern of flight data corresponding to a flight condition; extracting, from within the identified time window, a sample of the subset of the plurality of parameters of the flight data; and generating an environmental control system health report for the aircraft based on the extracted sample of the subset of the plurality of parameters of the flight data.

### BRIEF DESCRIPTION OF THE DRAWINGS

Embodiments of the invention will now be described, by way of example only, with reference to the accompanying drawings in which:

FIG. 1 depicts an exemplary embodiment of a system for automatically generating an environmental control system health report.

FIG. 2 depicts a block diagram of an exemplary system for sending data from an aircraft to a processing server.

FIG. 3 depicts an exemplary plot of flight data recorded by a Quick Access Recorder (QAR) with parameters of data that are relevant to the environmental control system as a function of time.

FIG. 4 depicts a flow diagram of an exemplary method of automatically generating an environmental control system health report of an aircraft.

FIG. 5A and FIG. 5B depict an exemplary web portal of an environmental control system health report.

FIG. 6 depicts an exemplary device in which one or more embodiments may be implemented.

### DETAILED DESCRIPTION

Subject matter will now be described more fully hereinafter with reference to the accompanying drawings, which form a part thereof, and which show, by way of illustration, specific exemplary embodiments. The scope of the invention is defined by the appended claims. The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

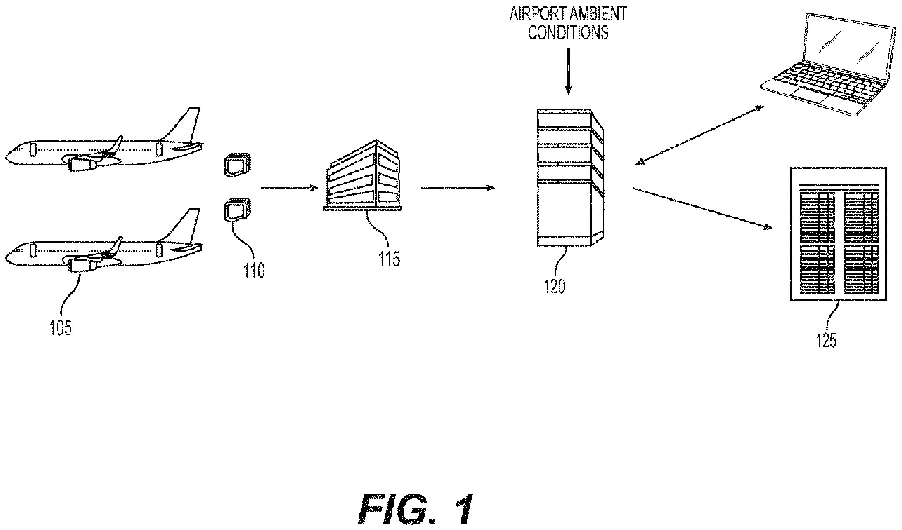

Referring now to the appended drawings, FIG. 1 shows an exemplary embodiment of a system for automatically generating an environmental control system health report. In general, FIG. 1 depicts one or more aircraft 105, flight data 110 collected from the aircraft 105, one or more airline servers 115, one or more processing servers 120, and one or more health reports 125. As described above, most current ECS health checks are performed manually by engineers and technicians while the aircraft is on the ground at the gate and while the ECS is powered by the APU. This process requires costly labor and APU fuel burn and also must sometimes overcome inaccurate data points due to ambient contaminants. Therefore, the system of FIG. 1 is directed to automatically collecting flight data 110 from aircraft 105, and processing flight data 110 at airline servers 115 and/or processing servers 120 to generate electronic flight system reports.

As shown in FIG. 1, when any given aircraft 105 lands at an airport, flight data 110 may be transmitted from the aircraft 105 to an airline server 115. Flight Data 110 may be recorded using an onboard gateway device, such as a Quick Access Recorder (QAR), configured to log and transmit raw recording of avionics data. However, in many cases, QAR or any other existing flight data 110 may be recorded during the flight using any conventional recording system, known in the art. The airline server 115 may then push the flight data 110 to a processing server 120 and the processing server 120 may generate an environmental control system health report 125. The environmental control system health report 125 may then be accessed by airline personnel via an online web portal 500, described below, and/or may be sent to airline personnel via weekly emails.

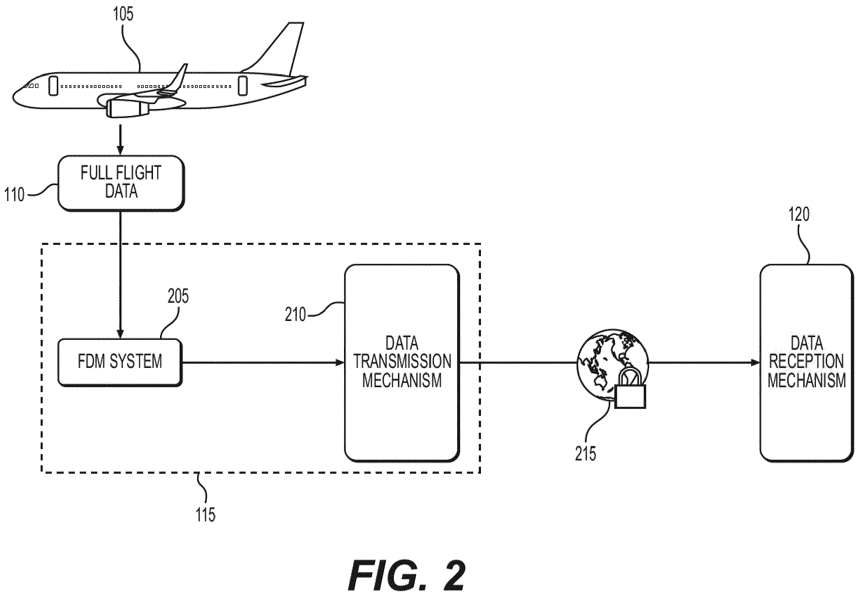

FIG. 2 is a block diagram of an exemplary system for sending data from an aircraft to a processing server. In general, FIG. 2 depicts aircraft 105, flight data 110, airline server 115, and a data reception mechanism of processing server 120. Airline server 115 comprises a flight data monitoring (FDM) system 205 and a data transmission mechanism 210. Airline server 115 is disposed in communication with the data reception mechanism of processing server 120 via secure Internet connection 215.

As shown in FIG. 2, aircraft 105 may generate flight data 110 before, during, and/or after a flight. As mentioned above, full flight data 110 may be recorded, using a QAR, during the flight and may be available to be accessed at the end of the flight. After aircraft 105 lands at an airport, full flight data 110 may be automatically or manually downloaded to a flight data monitoring (FDM) system 205 of the airline server 115. The flight data 110 may then be forwarded to a data transmission mechanism 210 of the airline server 115. In the exemplary embodiment, the FDM system 205 and the data transmission mechanism 210 together constitute the airline server 115. However, airline server 115 may comprise any number of components as necessary to receive and send flight data 110. After the flight data 110 is received on the airline server 115, flight data 110 may then be transmitted, via a secure Internet connection 215, to the data reception mechanism of processing server 120. Preferably, the transmission method over the secure Internet connection 215 utilizes Secure File Transfer Protocol (SFTP) and/or File Transfer Protocol Secure (FTPS) in order to provide adequate encryption and security during the data transmission. However, any desired secure wired and/or wireless transmission method known in the art may be utilized. After the flight data 110 is received at the processing server 120, flight data 110 may be analyzed for certain parameters and a health report may be generated by the method as described below.

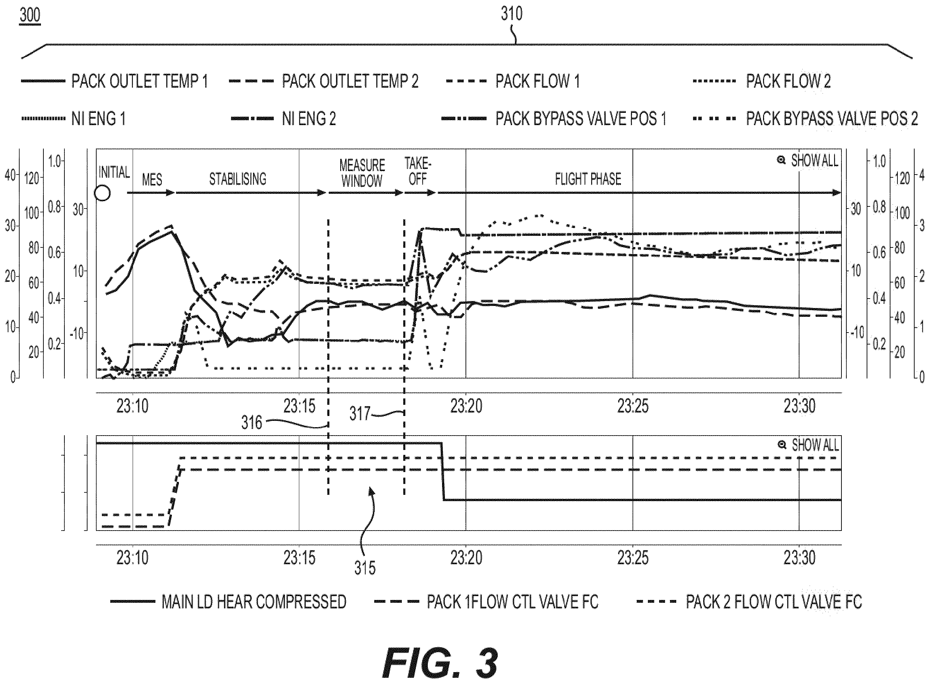

FIG. 3 is an exemplary plot 300 of flight data recorded by a Quick Access Recorder (QAR) with parameters of data that are relevant to the environmental control system as a function of time. In general, FIG. 3 depicts a plot 300 of environmental control system parameters 310, which are extracted from the flight data 110 collected by the QAR during a flight. Specifically, environmental control system parameters 310 may include: PACK outlet temp I, PACK outlet temp II, PACK flow rate I, PACK flow rate II, NI engine I, NI engine II, PACK bypass valve position I, PACK bypass valve position II, main landing gear position, PACK I flow control valve position, and PACK II flow control valve position, and any other parameters relevant to the environmental control system.

As described above, existing manual health check techniques may be performed manually while the aircraft is on the ground at the gate and while the ECS is powered by the APU. However, as shown in FIG. 3, QAR data used to generate an automatic ECS health check may encompass significantly more than the time period while the aircraft is on the ground at the gate and while the ECS is powered by the APU. For example, QAR data may include environmental control system parameters 310 obtained during engine start-up, take-off, mid-flight, and landing.

Specifically, as further seen in FIG. 3, the environmental control system parameters 310 of the QAR data may be split into different phases based on the system time. For example, FIG. 3 depicts a main engine start (MES) phase, a stabilizing phase, a take-off phase, and a flight phase. The MES phase begins when the doors are locked, the main engines are started, and the environmental control system transitions from being powered by an auxiliary power unit (APU) to being powered by the main engines. The stabilizing phase occurs before taxiing of the aircraft 105 when the main engines, and therefore the environmental control system, is stabilizing. The take-off phase occurs during aircraft 105 take-off and the flight phase occurs after take-off during the regular flight of aircraft 105.

As seen in FIG. 3, a time window 315 exists during which a pattern in the flight data 110 matches a known pattern of flight data corresponding to a flight condition during which relevant health check data may exist. In other words, the known pattern of flight data may align with or correspond to data used to create the manual reports, as discussed above. For example, in one embodiment, time window 315 corresponds to a period of QAR data during which existing manual health check techniques were performed (i.e., while the aircraft is on the ground at the gate and while the ECS is powered by the APU). It should be appreciated that the step of identifying time window 315 from within a broader QAR data set is not readily apparent. Therefore, the present disclosure is directed to systems and methods, including an algorithm, configured to identify the desired "measure window" in the QAR data in which the subset of data matches or closely resembles the time-based subset of data typically used for the manual reports. For example, the time window 315 is an optimal measure window in which data collected during the time window 315 matches or closely matches data that would have been obtained using the manual tests.

As shown in FIG. 3, in one embodiment, time window 315 may include a start time 316 and an end time 317. In one embodiment, start time 316 may be defined by the time period extending between the end of the engine stabilizing phase and the beginning of the taxi phase. In one embodiment, time window 315 continues during the at least a portion of taxi phase until a desired end time 317. End time 317 may be defined as the moment before the take-off phase begins and the engines begin to increase power. When the time window 315 is identified, a sample of the subset of flight data 110 may be extracted and used to generate the environmental control system health report automatically, described in the method 400 below.

Below is a table illustrating data for a few key parameters obtained from both the current, manual process and the QAR-based process:

**Table 1: Sample data for key parameters**

| **Key Parameter** | **Manual tests** | **QAR-based tests** |
|---|---|---|
| **Pack flow** | Avg. ∼55 (.55 kg/s) | Avg. ∼50 (.5 kg/s) |
| **Pack outlet temp.** | -20 to +15 deg. | -15 to +15 deg. |
| **Compressor outlet temp.** | Avg. ∼155 deg. | Avg. ∼145 deg. |
| **Water extract temp.** | Avg. ∼35 deg. | Avg. ∼35 deg. |
| **Bypass** | 2-20 | Typically 2 |
| **RAM** | 96 | 96 |

Below is a table of key differences between the current, manual health report test and the exemplary QAR-based health report test:

**Table 2: Differences between manual and QAR-based health report tests**

| **Current ECS Health Report Test** | **QAR-based ECS Health Report Test** |
|---|---|
| APU providing bleed air 10% higher flow rate | Engines providing bleed |
| RAM air driven by fan | Some slight additional RAM from groundspeed |
| No operational effects | Operational effects removed via regime algorithms |

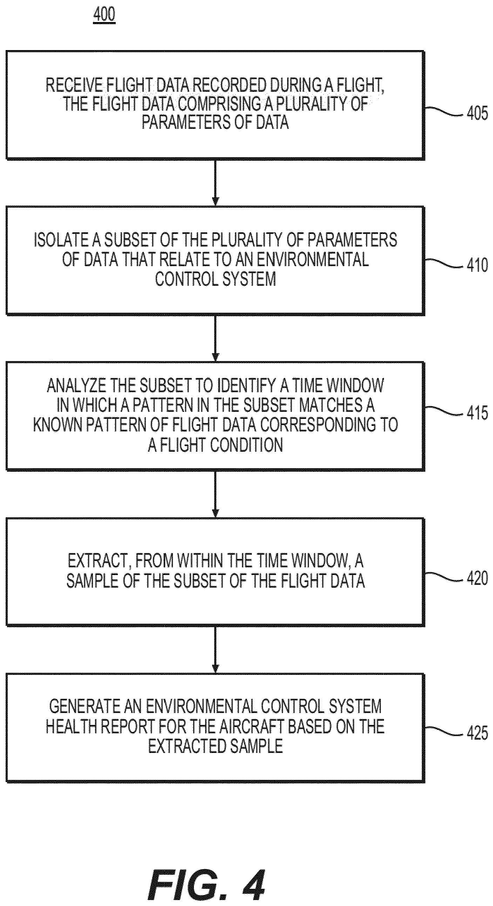

FIG. 4 depicts a flow diagram of a method 400 for automatically generating an environmental control system health report of an aircraft 105. In the method 400, flight data 110 recorded during a flight is received at a processing server 120 (Step 405). The flight data 110 comprises a plurality of parameters of data collected on the quick access recorder during the flight. Once the flight data 110 is received at the processing server 120, the processing server 120 may isolate a subset of the plurality of parameters 310 of the flight data 110 that relate to an environmental control system (Step 410). The processing server 120 may then analyze the subset of the plurality of parameters 310 of the flight data 110 in order to identify a time window in which a pattern in the subset of the plurality of parameters 310 of the flight data 110 matches a known pattern of flight data corresponding to a flight condition (Step 415). After the time window is identified, the processing server 120 may extract a sample of the subset of the plurality of parameters 310 of the flight data 110 from within the identified time window (Step 420). Based on the extracted sample of data, the processing server 120 may then generate an environmental control system health report for the aircraft (Step 425). It should be appreciated that while steps 405-425 are described as being performed by a processing server 120, any and/or all of steps 405-425 may be performed, either partially or entirely by one or more airline servers 115 or third-party servers.

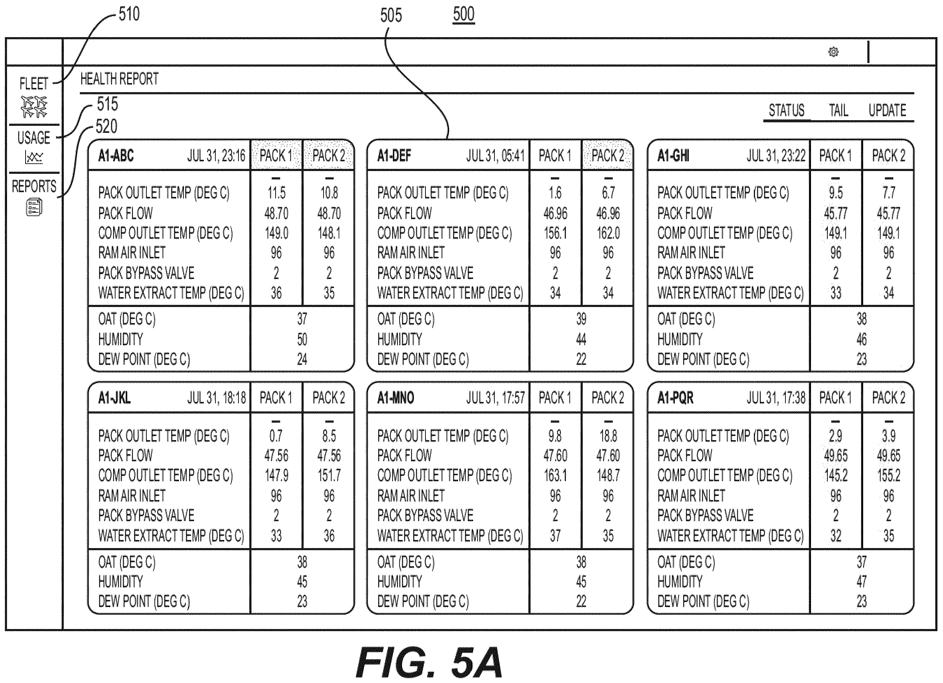

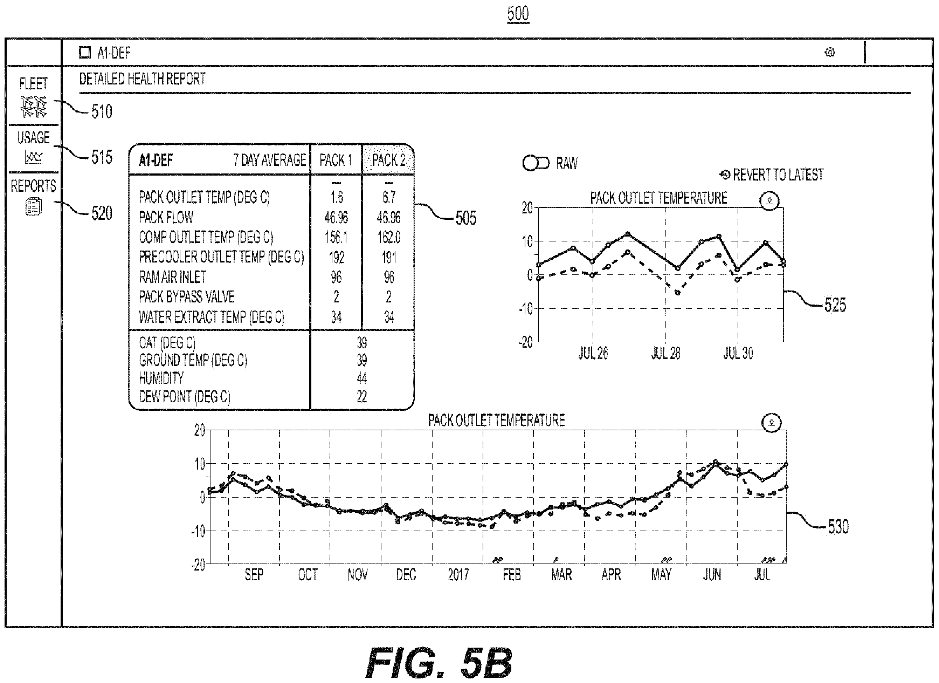

As described above, in one embodiment, generated ECS health reports may be generated as electronic files (e.g., PDF files) or as dynamic electronic displays (e.g., on electronic screens or portals). Accordingly, FIG. 5a and FIG. 5b depict an exemplary web portal 500 of an environmental control system health report generated by the method described above. The web portal 500 of FIG. 5a and FIG. 5b may be configured to allow a user to view environmental control system health reports 505 and may, for example, include a plurality of tabs including: a fleet tab 510, a usage tab 515, and a reports tab 520. The fleet tab 510 may allow a user to view the generated environmental control system health reports 505 related to an airline's entire fleet of aircraft 105. The usage tab 510 may show detailed plots of QAR data related to the environmental control system, such as plot 300 depicted in FIG. 3. The reports tab 515 may display a detailed view of the environmental control system health report 505.

FIG. 5A depicts web portal 500 in the fleet tab 510, displaying a fleet overview. The web portal 500 in this view displays a simple summary of an ECS health report 505 for each aircraft 105 in an airline's fleet. As shown in FIG. 5A, the ECS health reports 505 can be ordered by date, priority, or tail number, among other things.

FIG. 5B depicts web portal 500 in an individual aircraft view showing a detailed ECS health report 505, e.g. by selecting a single ECS health report 505 from the fleet overview of FIG. 5A. The individual aircraft view displays the ECS health report 505 for the selected aircraft 505, as well as trends of key parameters (i.e. individual plots of key parameters). The individual aircraft view allows a user to view all previous health checks for an individual aircraft 105. Furthermore, the detailed health report displays a "quick look" trend 525 for the past week and an annual health check trend 530. These features allow an airline to view comprehensive data related to the environmental control system, which enables the airline to better and more quickly monitor and attend to any defects or required maintenance in the environmental control system.

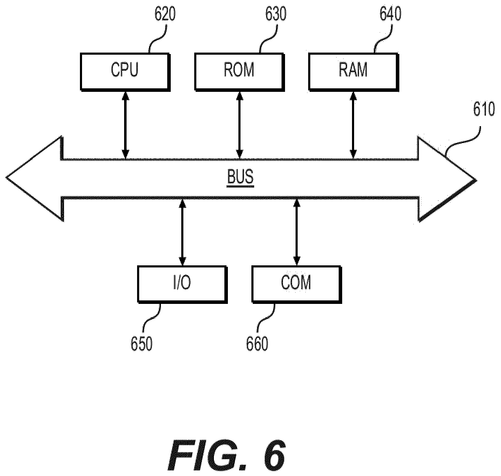

FIG. 6 illustrates a high-level functional block diagram of an exemplary computer device or system, in which embodiments of the present disclosure, or portions thereof, may be implemented, e.g., as computer-readable code. For example, each of the exemplary systems, user interfaces and methods described above with respect to FIGS. 1-5 can be implemented in device 600 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-5.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-5 may be implemented using device 600. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

As shown in FIG. 6, device 600 may include a central processing unit (CPU) 620. CPU 620 may be any type of processor device including, for example, any type of special purpose or a general-purpose microprocessor device. As will be appreciated by persons skilled in the relevant art, CPU 620 also may be a single processor in a multi-core/multiprocessor system, such system operating alone, or in a cluster of computing devices operating in a cluster or server farm. CPU 620 may be connected to a data communication infrastructure 610, for example, a bus, message queue, network, or multi-core message-passing scheme.

Device 600 may also include a main memory 640, for example, random access memory (RAM), and may also include a secondary memory 630. Secondary memory 630, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 630 may include other similar means for allowing computer programs or other instructions to be loaded into device 600. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 600.

Device 600 may also include a communications interface ("COM") 660. Communications interface 660 allows software and data to be transferred between device 600 and external devices. Communications interface 660 may include a modem, a network interface (such as an Ethernet card), a communications port, a PCMCIA slot and card, or the like. Software and data transferred via communications interface 660 may be in the form of signals, which may be electronic, electromagnetic, optical, or other signals capable of being received by communications interface 660. These signals may be provided to communications interface 660 via a communications path of device 600, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 600 also may include input and output ports 650 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with the scope of the invention being defined by the appended claims.

## Claims

1. A computer-implemented method for automatically generating an environmental control system health report of an aircraft, the method comprising:
receiving, automatically over an electronic network, flight data recorded during a flight, the flight data comprising a plurality of parameters of data collected from the aircraft during the flight;
isolating a subset of the plurality of parameters of the flight data that relate to an environmental control system of the aircraft;
analyzing the subset of the plurality of parameters of the flight data to identify a time window in which a pattern in the subset of the plurality of parameters of the flight data matches a known pattern of flight data corresponding to a flight condition;
extracting, from within the identified time window, a sample of the subset of the plurality of parameters of the flight data; and
generating an environmental control system health report for the aircraft based on the extracted sample of the subset of the plurality of parameters of the flight data.

2. The computer-implemented method of claim 1, wherein the time window comprises a start time and an end time.

3. The computer-implemented method of claim 2, wherein the start time is a time in the recorded flight data after a system stabilizing phase and during a taxi phase; and
wherein the end time is a time in the recorded flight data after the start time and immediately before a take-off phase.

4. The computer-implemented method of claim 1, wherein the known pattern of flight data corresponding to a flight condition comprises flight data used to manually create the environmental control system health report.

5. The computer-implemented method of claim 4, wherein the flight data used to manually create the environmental control system health report comprises flight data obtained while the aircraft is powered by an auxiliary power unit.

6. The computer-implemented method of claim 4, wherein the flight data used to manually create the environmental control system health report comprises flight data obtained before a main engine start phase.

7. The computer-implemented method of claim 1, wherein the flight condition is a taxi phase between a system stabilizing phase and a take-off phase.

8. The computer-implemented method of claim 1, wherein the subset of the plurality of parameters of the flight data that relate to the environmental control system of the aircraft comprises at least one of a first PACK outlet temperature, a second PACK outlet temperature, a first PACK flow rate, a second PACK flow rate, a first engine fan speed, a second engine fan speed, a first PACK bypass valve position, and a second PACK bypass valve position.

9. The computer-implemented method of claim 1, further comprising transmitting the environmental control system health report to a user.

10. A computer system for automatically generating an environmental control system health report of an aircraft, the system comprising:
a data storage device storing instructions for automatically generating an environmental control system health report of an aircraft; and
a processor configured to execute the instructions to perform a method comprising:
receiving, automatically over an electronic network, flight data recorded during a flight, the flight data comprising a plurality of parameters of data collected from the aircraft during the flight;
isolating a subset of the plurality of parameters of the flight data that relate to an environmental control system of the aircraft;
analyzing the subset of the plurality of parameters of the flight data to identify a time window in which a pattern in the subset of the plurality of parameters of the flight data matches a known pattern of flight data corresponding to a flight condition;
extracting, from within the identified time window, a sample of the subset of the plurality of parameters of the flight data; and
generating an environmental control system health report for the aircraft based on the extracted sample of the subset of the plurality of parameters of the flight data.

## Patentansprüche

1. Computerimplementiertes Verfahren zum automatischen Erzeugen eines Zustandsberichts eines Klimaregelungssystems eines Flugzeugs, wobei das Verfahren umfasst:
automatisches Empfangen von Flugdaten, die während eines Fluges aufgezeichnet wurden, über ein elektronisches Netzwerk, wobei die Flugdaten eine Vielzahl von Parametern von Daten umfassen, die während des Fluges von dem Flugzeug gesammelt wurden;
Isolieren einer Teilmenge der Vielzahl von Parametern der Flugdaten, die ein Klimaregelungssystem des Flugzeugs betreffen;
Analysieren der Teilmenge der Vielzahl von Parametern der Flugdaten, um ein Zeitfenster zu erkennen, in dem ein Muster in der Teilmenge der Vielzahl von Parametern der Flugdaten mit einem bekannten Muster von Flugdaten übereinstimmt, das einer Flugbedingung entspricht;
Extrahieren einer Stichprobe der Teilmenge der Vielzahl von Parametern der Flugdaten aus dem erkannten Zeitfenster; und
Erzeugen eines Zustandsberichts des Klimaregelungssystems für das Flugzeug auf der Grundlage der extrahierten Stichprobe der Teilmenge der Vielzahl von Parametern der Flugdaten.

2. Computerimplementiertes Verfahren nach Anspruch 1, wobei das Zeitfenster eine Anfangszeit und eine Endzeit umfasst.

3. Computerimplementiertes Verfahren nach Anspruch 2, wobei die Anfangszeit eine Zeit in den aufgezeichneten Flugdaten nach einer Systemstabilisierungsphase und während einer Rollphase ist; und
wobei die Endzeit eine Zeit in den aufgezeichneten Flugdaten nach der Anfangszeit und unmittelbar vor einer Phase des Abhebens ist.

4. Computerimplementiertes Verfahren nach Anspruch 1, wobei das bekannte Muster von Flugdaten, das einer Flugbedingung entspricht, Flugdaten umfasst, die zum manuellen Erstellen des Zustandsberichts des Klimaregelungssystems verwendet werden.

5. Computerimplementiertes Verfahren nach Anspruch 4, wobei die Flugdaten, die zum manuellen Erstellen des Zustandsberichts des Klimaregelungssystems verwendet werden, Flugdaten umfassen, die erhalten werden, während das Flugzeug von einem Hilfstriebwerk mit Strom versorgt wird.

6. Computerimplementiertes Verfahren nach Anspruch 4, wobei die Flugdaten, die zum manuellen Erstellen des Zustandsberichts des Klimaregelungssystems verwendet werden, Flugdaten umfassen, die vor einer Startphase des Haupttriebwerks erhalten wurden.

7. Computerimplementiertes Verfahren nach Anspruch 1, wobei die Flugbedingung eine Rollphase zwischen einer Systemstabilisierungsphase und einer Phase des Abhebens ist.

8. Computerimplementiertes Verfahren nach Anspruch1, wobei die Teilmenge der Vielzahl von Parametern der Flugdaten, die das Klimaregelungssystem des Flugzeugs betreffen, mindestens eine erste PACK-Auslasstemperatur, eine zweite PACK-Auslasstemperatur, einen ersten PACK-Volumenstrom, einen zweiten PACK-Volumenstrom, eine erste Triebwerkgebläsedrehzahl, eine zweite Triebwerkgebläsedrehzahl, eine erste PACK-Bypassventilstellung und eine zweite PACK-Bypassventilstellung umfasst.

9. Computerimplementiertes Verfahren nach Anspruch 1, ferner umfassend das Übertragen des Zustandsberichts des Klimaregelungssystems zu einem Benutzer.

10. Computerimplementiertes System zum automatischen Erzeugen eines Zustandsberichts eines Klimaregelungssystems eines Flugzeugs, wobei das System umfasst:
eine Datenspeichervorrichtung, die Anweisungen zum automatischen Erzeugen eines Zustandsberichts eines Klimaregelungssystems eines Flugzeugs speichert; und
einen Prozessor, der konfiguriert ist, um die Anweisungen auszuführen, um ein Verfahren auszuführen, das umfasst:
automatisches Empfangen von Flugdaten, die während eines Fluges aufgezeichnet wurden, über ein elektronisches Netzwerk, wobei die Flugdaten eine Vielzahl von Parametern von Daten umfassen, die während des Fluges von dem Flugzeug gesammelt wurden;
Isolieren einer Teilmenge der Vielzahl von Parametern der Flugdaten, die ein Klimaregelungssystem des Flugzeugs betreffen;
Analysieren der Teilmenge der Vielzahl von Parametern der Flugdaten, um ein Zeitfenster zu erkennen, in dem ein Muster in der Teilmenge der Vielzahl von Parametern der Flugdaten mit einem bekannten Muster von Flugdaten übereinstimmt, das einer Flugbedingung entspricht;
Extrahieren einer Stichprobe der Teilmenge der Vielzahl von Parametern der Flugdaten aus dem erkannten Zeitfenster; und
Erzeugen eines Zustandsberichts des Klimaregelungssystems für das Flugzeug auf der Grundlage der extrahierten Stichprobe der Teilmenge der Vielzahl von Parametern der Flugdaten.

## Revendications

1. Procédé mis en œuvre par ordinateur pour générer automatiquement un rapport sur l'état de santé d'un système de commande environnemental d'un aéronef, le procédé comprenant :
recevoir, automatiquement sur un réseau électronique, des données de vol enregistrées lors d'un vol, les données de vol comprenant une pluralité de paramètres de données collectées auprès de l'aéronef pendant le vol ;
isoler un sous-ensemble de la pluralité de paramètres des données de vol qui se rapportent à un système de commande environnemental de l'aéronef ;
analyser le sous-ensemble de la pluralité de paramètres des données de vol pour identifier une fenêtre temporelle dans laquelle un motif dans le sous-ensemble de la pluralité de paramètres des données de vol correspond à un motif connu de données de vol correspondant à une condition de vol ;
extraire, depuis l'intérieur de la fenêtre temporelle identifiée, un échantillon du sous-ensemble de la pluralité de paramètres des données de vol ; et
générer un rapport sur l'état de santé du système de commande environnemental pour l'aéronef sur la base de l'échantillon extrait du sous-ensemble de la pluralité de paramètres des données de vol.

2. Procédé mis en œuvre par ordinateur selon la revendication 1, dans lequel la fenêtre temporelle comprend une heure de début et une heure de fin.

3. Procédé mis en œuvre par ordinateur selon la revendication 2, dans lequel l'heure de début est une heure dans les données de vol enregistrées après une phase de stabilisation du système et pendant une phase de roulage ; et
dans lequel l'heure de fin est une heure dans les données de vol enregistrées après l'heure de début et immédiatement avant une phase de décollage.

4. Procédé mis en œuvre par ordinateur selon la revendication 1, dans lequel le modèle connu de données de vol correspondant à une condition de vol comprend des données de vol utilisées pour créer manuellement le rapport sur l'état de santé du système de commande environnemental.

5. Procédé mis en œuvre par ordinateur selon la revendication 4, dans lequel les données de vol utilisées pour créer manuellement le rapport sur l'état de santé du système de commande environnemental comprennent des données de vol obtenues alors que l'aéronef est propulsé par une unité d'alimentation auxiliaire.

6. Procédé mis en œuvre par ordinateur selon la revendication 4, dans lequel les données de vol utilisées pour créer manuellement le rapport sur l'état de santé du système de commande environnemental comprennent des données de vol obtenues avant une phase de démarrage du moteur principal.

7. Procédé mis en œuvre par ordinateur selon la revendication 1, dans lequel la condition de vol est une phase de roulage entre une phase de stabilisation du système et une phase de décollage.

8. Procédé mis en œuvre par ordinateur selon la revendication 1, dans lequel le sous-ensemble de la pluralité de paramètres des données de vol qui se rapportent au système de commande environnemental de l'aéronef comprend au moins l'une d'une première température de sortie PACK, d'une seconde température de sortie PACK, d'un premier débit PACK, d'un second débit PACK, d'une première vitesse de ventilateur de moteur, d'une seconde vitesse de ventilateur de moteur, d'une première position de soupape de dérivation PACK et d'une seconde position de soupape de dérivation PACK.

9. Procédé mis en œuvre par ordinateur selon la revendication 1, comprenant en outre la transmission du rapport sur l'état de santé du système de commande environnemental à un utilisateur.

10. Système informatique pour générer automatiquement un rapport sur l'état de santé d'un système de commande environnemental d'un aéronef, le système comprenant :
un dispositif de stockage de données stockant des instructions pour générer automatiquement un rapport sur l'état de santé du système de commande environnemental d'un aéronef ; et
un processeur configuré pour exécuter les instructions pour exécuter un procédé comprenant :
recevoir, automatiquement sur un réseau électronique, des données de vol enregistrées lors d'un vol, les données de vol comprenant une pluralité de paramètres de données collectées auprès de l'aéronef pendant le vol ;
isoler un sous-ensemble de la pluralité de paramètres des données de vol qui se rapportent à un système de commande environnemental de l'aéronef ;
analyser le sous-ensemble de la pluralité de paramètres des données de vol pour identifier une fenêtre temporelle dans laquelle un motif dans le sous-ensemble de la pluralité de paramètres des données de vol correspond à un motif connu de données de vol correspondant à une condition de vol ;
extraire, depuis l'intérieur de la fenêtre temporelle identifiée, un échantillon du sous-ensemble de la pluralité de paramètres des données de vol ; et
générer un rapport sur l'état de santé du système de commande environnemental pour l'aéronef sur la base de l'échantillon extrait du sous-ensemble de la pluralité de paramètres des données de vol.
